# EUROPÄISCHE PATENTSCHRIFT

(11) **EP 1 397 845 B1**
(45) Veröffentlichungstag und Bekanntmachung des Hinweises auf die Patenterteilung: **11.07.2007**
(21) Anmeldenummer: 02742764.0
(22) Anmeldetag: 18.05.2002
(51) Int. Cl.: H01Q 7/08, H01Q 1/32, B60R 25/00, G07C 9/00

(54) **FERRITANTENNE**
FERRITE ANTENNA
ANTENNE FERRITE

(30) Priorität: 23.05.2001 DE 10125080
(43) Veröffentlichungstag der Anmeldung: 17.03.2004
(73) Patentinhaber: Neosid Pemetzrieder Gmbh & Co. Kg, 58553 Halver (DE); Huf Hülsbeck & Fürst GmbH & Co. KG, 42551 Velbert (DE)
(72) Erfinder: SWOBODA, Eugeniusz, 58644 Iserlohn (DE); WITTE, Martin, 48683 Ahaus (DE)
(74) Vertreter: Feder, Wolf-Dietrich
(86) Internationale Anmeldenummer: PCT/DE2002/001797
(87) Internationale Veröffentlichungsnummer: WO 2002/095873

(56) Entgegenhaltungen:
- EP-A- 1 037 304
- GB-A- 707 142
- US-A- 2 727 147
- US-A- 2 895 129
- US-A- 4 148 036
- US-A- 5 134 392

## Beschreibung

Die Erfindung betrifft eine Ferritantenne sowie ein Verfahren zur Herstellung und zum Abgleich einer Ferritantenne.

Die Erfindung betrifft weiterhin eine schlüssellose Betätigungs- und/oder Schließeinrichtung für Kraftfahrzeuge mit einer derartigen Antenne.

Es ist bei induktiven Bauelementen, insbesondere Drosselspulen bekannt, ein oder mehrere Wicklungen direkt auf einen Kern aus Ferritmaterial aufzubringen. Derartige induktive Bauelemente sind beispielsweise in den deutschen Gebrauchsmustern DE 298 04 135 U1 und DE 298 24 118 U1 beschrieben. Bei derartig aufgebauten Bauelementen ist ein nachträglicher Abgleich auf eine gewünschte Frequenz oder Induktivität schwierig und aufwendig.

Deshalb ist bei Ferritantennen die Wicklung im allgemeinen auf einen Spulenträger aus Kunststoffmaterial aufgebracht und in den beispielsweise rohrförmigen Spulenträger ist zum Abgleich auf eine gewünschte Frequenz oder Induktivität ein Ferritkern eingesteckt oder eingeschraubt, der in axialer Richtung bewegbar ist und nach dem Abgleich beispielsweise durch Verkleben mit dem Spulenträger festgelegt werden kann. Eine solche Ferritantenne ist beispielsweise im deutschen Gebrauchsmuster DE 200 00 874 U1 beschrieben.

Die GB 707 142 offenbart eine Spulenantenne zum Aussenden und Empfangen von Rundfunkwellen mit einem äußeren rohrförmigen ferromagnetischen Kern, auf welchen eine Spule gewickelt ist. Innerhalb des rohrförmigen Kerns ist ein zylinderförmiger ferromagnetischer Kern in axialer Richtung verschiebbar angeordnet. Durch die Verschiebung kann die Antenne auf die gewünschte Frequenz abgestimmt werden.

Die US-A-2 895 129 offenbart in ähnlicher Weise eine Radioantenne für mobile Empfangsgeräte mit einer Spule, deren Induktivität abgeglichen werden kann. Zu diesem Zweck ist die Spule auf einen rohrförmigen Kern gewickelt. Innerhalb des rohrförmigen Kerns ist ein zylinderförmiger ferromagnetischer Kern in axialer Richtung verschiebbar angeordnet. Durch die Verschiebung kann die Induktivität geändert werden.

Die GB 628 998 offenbart eine Vorrichtung für ein Radioempfangsgerät, bei welcher zum Abgleich eines Antennenkreises mit einem Empfangs-Schwingkreis zwei auf Spulenkörpern angeordnete Spulen mittels eines Stabes verschiebbar innerhalb des Spulenkörpers, auf welchen die Spule des Schwingkreises gewickelt ist, angeordnet sind.

Die GB 449 450 und die GB 502 296 beschreiben ebenfalls Spulen, deren Induktivität durch eine Relativbewegung mehrerer Kerne zueinander abgeglichen werden kann.

Die DE 948 067 schließlich beschreibt eine Spule mit einem durchbohrten Hochfrequenzkern in ihrem Innern und mit einem durchbohrten Abgleichkern außerhalb derselben, die zum Abgleichen der Induktivität gegeneinander verschiebbar sind, wobei die fest auf dem Ferritkern angeordnete Spule in zwei Teile aufgeteilt ist, von denen der eine Teil so nahe an dem einen Ende des Kerns angebracht ist, dass der Abgleichkern trotz der hohen Permeabilität des Hochfrequenzkerns genügend wirksam ist, während der andere Teil so nahe an dem anderen Ende des Kerns angeordnet ist, dass eine genügend feste Kopplung mit einer zweiten Spule erzielbar ist, die auf einem zweiten, durchbohrten, auf derselben Stange verschiebbaren Hochfrequenzkern angeordnet ist.

Bei den beschriebenen Ferritantennen ist es aber schwierig, eine bestimmte Länge zu überschreiten und eine bestimmte Dicke zu unterschreiten. Dies ist darauf zurückzuführen, daß die Herstellung sehr schmaler Ferritkerne größerer Länge aufwendig und schwierig ist und bei der Gesamtdicke des Bauelementes die Dicke des Spulenträgers zu berücksichtigen ist.

In der modernen Technik, insbesondere im Kraftfahrzeugbau werden in zunehmendem Maße induktive Bauelemente, insbesondere Ferritantennen angefordert, die aus Einbaugründen möglichst lang und schmal ausgebildet sein sollen, wobei die Ferritantennen aber abgleichbar sein sollen. Derartige Ferritantennen finden insbesondere bei schlüssellosen Betätigungs- und/oder Schließeinrichtungen für Kraftfahrzeuge Verwendung, wobei die Ferritantenne im Türgriff, im Innenraum oder in der Stoßstange angeordnet ist.

Der Erfindung liegt die Aufgabe zugrunde, eine Ferritantenne zu schaffen, die abstimmbar ist, dabei aber lang und schmal ausgebildet sein kann, und die für den Einbau in einen Türgriff eines Kraftfahrzeugs geeignet ist. Die Herstellungskosten sollten möglichst niedrig sein.

Die Lösung dieser Aufgabe erfolgt vorrichtungsmäßig erfindungsgemäß mit den Merkmalen des Patentanspruchs 1. Vorteilhafte Weiterbildungen des Bauelementes sind in den abhängigen Ansprüchen beschrieben.

Eine schlüssellose Betätigungs- und/oder Schließeinrichtung für Kraftfahrzeuge mit einer Antenne, die im Türgriff angeordnet ist, ist durch den Patentanspruch 10 gekennzeichnet.

Ein Verfahren zur Herstellung und zum Abgleich einer derartigen Ferritantenne ist Gegenstand von Patentanspruch 11. Eine vorteilhafte Weiterbildung des Verfahrens ist in Anspruch 12 beschrieben.

Ein Grundgedanke der Erfindung besteht darin, zur Ermöglichung des Abgleichs einen zweiten Ferritkern vorzusehen, wobei beide Ferritkerne koaxial zueinander in einem Spulenträger angeordnet sind, und wobei der erste die Wicklung tragende Ferritkern von vornherein im Spulenträger festgelegt ist und der zweite Ferritkern zum Abgleich der Spule im Spulenträger axial bewegbar angeordnet ist und erst nach dem Abgleich im Spulenträger festgelegt wird. Der zweite Ferritkern ist gegenüber der Längsachse des ersten Ferritkerns um einen spitzen Winkel von, je nach dem Design des Türgriffs, maximal 30° verschwenkt angeordnet, wodurch die Ferritantenne in den Türgriff eines Kraftfahrzeugs als Teil einer schlüssellosen Betätigungs- und/oder Schließeinrichtung eingebaut werden kann. Die Wicklung bzw. die Wicklungen des ersten Ferritkerns können direkt auf den Kern aufgewickelt sein, und es ist auch möglich, daß der zweite Kern mindestens eine Wicklung trägt.

Die beiden Ferritkerne können die gleiche Form und axiale Länge besitzen, was die Gesamtherstellungskosten des Bauelementes stark verringert, sie können aber für spezielle Zwecke auch unterschiedliche Formen und Längen besitzen. Es können Ferritkerne mit rechteckigem oder rundem Querschnitt zum Einsatz kommen und die Spulenträger sind dann an die entsprechende Kemform angepaßt. Der zweite Ferritkern ist bei rechteckigem Querschnitt im Spulenträger verschiebbar angeordnet, während bei einem runden Querschnitt sowohl Verschiebbarkeit als auch Einschraubbarkeit vorgesehen sein kann.

Die Festlegung des Ferritkerns im Spulenträger kann in an sich bekannter Weise durch Verklebung erfolgen. Im folgenden wird anhand der beigefügten Zeichnung ein Ausführungsbeispiel für eine Ferritantenne nach der Erfindung näher erläutert.

In der Zeichnung zeigen:
- Fig. 1: eine Ferritantenne in einer Seitenansicht;
- Fig. 2: die Ferritantenne nach Fig. 1 in Aufsicht.

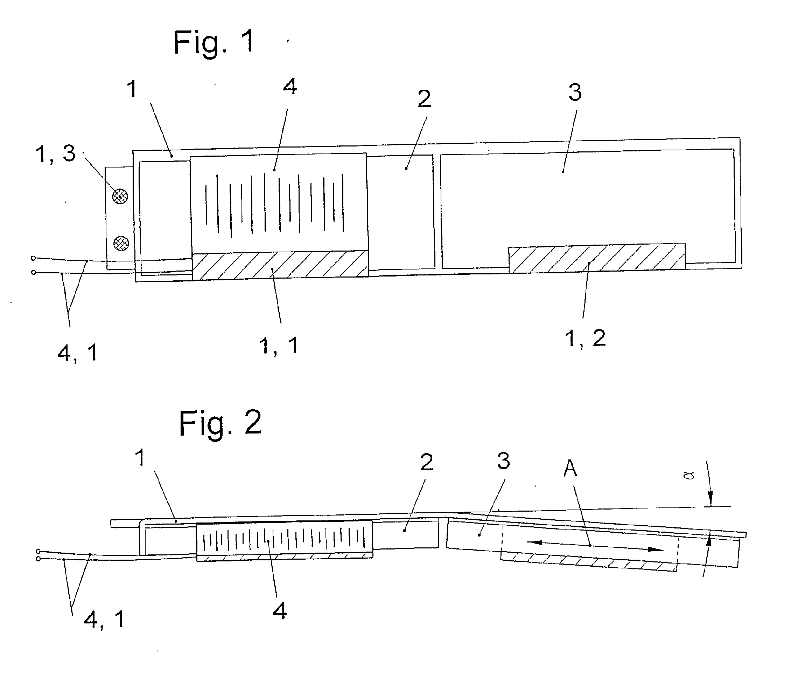

Die in Fig. 1 und 2 dargestellte Ferritantenne besitzt einen Spulenträger 1 aus Kunststoffmaterial, der als flache rechteckige Leiste ausgebildet ist, die an einer Schmalseite mit einer Halterungslasche 1.3 versehen ist und an einer ihrer Längskanten zwei, im Querschnitt hakenförmige Halterungen 1.1 und 1.2 aufweist, die in Längsrichtung mit Abstand voneinander angeordnet sind und dazu bestimmt sind, jeweils einen von zwei Ferritkernen 2 und 3 aufzunehmen. Die Ferritkerne 2 und 3 besitzen einen rechteckigen Querschnitt und werden mit ihren Breitseiten derart auf den Spulenträger 1 auf- und in ihn eingesetzt, daß sie von den Halterungen 1.1 und 1.2 jeweils an ihrer Schmalseite umfaßt werden.

Auf den ersten Ferritkern 2 ist direkt eine Spulenwicklung 4 fest aufgebracht, wobei die Drahtenden 4.1 in axialer Richtung herausgeführt sind. Der erste Ferritkern 2 wird sogleich nach dem Einsetzen im Spulenträger 1 beispielsweise durch Verkleben festgelegt.

Der zweite Ferritkern 3 ist zunächst in axialer Richtung verschiebbar auf den Träger 1 und in die Halterung 1.2 eingesetzt. Zum Abgleich des Bauelementes auf eine bestimmte Induktivität oder Frequenz wird er gegenüber dem ersten Ferritkern 2 in axialer Richtung (Pfeilrichtung A) verschoben, bis die einander gegenüberliegenden Stirnseiten der beiden Ferritkerne 2 und 3 genau den gewünschten Abstand voneinander aufweisen. Dann wird auch der zweite Ferritkern 3, beispielsweise durch Verkleben, auf dem Spulenträger festgelegt.

Um den Einbau der dargestellten Ferritantenne in den Türgriff eines Kraftfahrzeugs zu erleichtern, ist wie aus Fig. 2 zu entnehmen, der zweite Ferritkern 3 gegenüber der Längsachse des ersten Ferritkerns 2 um einen spitzen Winkel α verschwenkt, der im dargestellten Ausführungsbeispiel nur wenige Winkelgrade beträgt, der aber je nach dem Design des Türgriffs bis zu maximal 30° betragen kann.

Die Herstellung und der Abgleich der Ferritantenne können dann beispielsweise in folgenden Verfahrensschritten ablaufen:
a) Bereitstellen des Spulenträgers 1;
b) Bereitstellen zweier Ferritkerne 2 und 3;
c) Bewickeln des ersten Ferritkerns 2 mit einer Wicklung 4;
d) Einsetzen des ersten Ferritkerns 2 in den Spulenträger 1 und Festlegen des ersten Ferritkerns 2 im Spulenträger 1;
e) Einsetzen des zweiten Ferritkerns 3 in den Spulenträger 1;
f) Abgleichen des Bauelementes durch axiales Verschieben des zweiten Ferritkerns 3 im Spulenträger 1;
g) Festlegen des zweiten Ferritkerns 3 im Spulenträger 1 durch Verkleben.

## Patentansprüche

1. Ferritantenne, mit mindestens einer Wicklung, die um einen Kern aus Ferritmaterial herum angeordnet ist, wobei dem ersten Kern (2), der die Wicklung (4) bzw. Wicklungen trägt und fest in einem Spulenträger (1) angeordnet ist, ein zweiter Kern (3) aus Ferritmaterial zugeordnet ist, der koaxial zum ersten Kern (2) und in axialer Richtung bewegbar im gleichen Spulenträger (1) derart angeordnet ist, daß die einander zugewandten Stirnflächen der beiden Kerne (2, 3) einen vorgegebenen, durch Bewegung des zweiten Kerns (3) in axialer Richtung zu Abgleichzwecken veränderbaren Abstand voneinander aufweisen, wobei der zweite Kern (3) nach dem Abgleich im oder am Spulenträger (1) festlegbar ist, und wobei der zweite Ferritkern (3) gegenüber der Längsachse des ersten Ferritkerns (2) um einen spitzen Winkel (α) von maximal 30° verschwenkt angeordnet ist.

2. Ferritantenne nach Anspruch 1, **dadurch gekennzeichnet, daß** auf den ersten Kern (2) die Wicklung (4) bzw. Wicklungen direkt aufgewickelt sind.

3. Ferritantenne nach Anspruch 1 oder 2, **dadurch gekennzeichnet, daß** auch der zweite Kern mindestens eine Wicklung trägt.

4. Ferritantenne nach einem der Ansprüche 1 bis 3, **dadurch gekennzeichnet, daß** der zweite Kern (3) die gleiche Form und axiale Länge besitzt wie der erste Kern (2).

5. Ferritantenne nach einem der Ansprüche 1 bis 4, **dadurch gekennzeichnet, daß** beide Kerne (2, 3) einen rechteckigen Querschnitt besitzen.

6. Ferritantenne nach Anspruch 5, **dadurch gekennzeichnet, daß** der Spulenträger (1) aus Kunststoffmaterial besteht und als flache Leiste ausgebildet ist, auf die jeder Kern (2, 3) mit seiner Breitseite aufgesetzt ist und die an mindestens einer ihrer Längskanten mindestens eine im Querschnitt hakenförmige, den jeweiligen Kern an seiner Schmalseite umfassende Halterung (1.1, 1.2) aufweist.

7. Ferritantenne nach einem der Ansprüche 1 bis 4, **dadurch gekennzeichnet, daß** beide Kerne einen runden Querschnitt besitzen;

8. Ferritantenne nach Anspruch 7, **dadurch gekennzeichnet, daß** der Spulenträger aus Kunststoffmaterial besteht und als Rohr oder den jeweiligen Kern mindestens auf einem Teil seines Umfangs umfassendes Teilrohr ausgebildet ist.

9. Ferritantenne nach einem der Ansprüche 1 bis 8, **dadurch gekennzeichnet, daß** die Kerne (2, 3) im oder am Spulenträger (1) durch Verklebung festgelegt sind.

10. Schlüssellose Betätigungs- und/oder Schließeinrichtung für Kraftfahrzeuge mit einer Ferritantenne gemäß einem der vorhergehenden Ansprüche, die im Türgriff angeordnet ist.

11. Verfahren zur Herstellung und zum Abgleich einer Ferritantenne nach einem der Ansprüche 1 bis 9, **gekennzeichnet durch** folgende Verfahrensschritte:
a) Bereitstellen eines Spulenträgers;
b) Bereitstellen zweier Ferritkerne;
c) Bewickeln des ersten Ferritkerns mit mindestens einer Wicklung;
d) Einsetzen des ersten Ferritkerns in den Spulenträger und Festlegen des ersten Ferritkerns im Spulenträger;
e) Einsetzen des zweiten Ferritkerns in den Spulenträger;
f) Abgleichen der Ferritantenne **durch** axiales Bewegen des zweiten Ferritkerns im Spulenträger;
g) Festlegen des zweiten Ferritkerns im Spulenträger.
h) Verschwenken des zweiten Ferritkerns gegenüber der Längsachse des ersten Ferritkerns um einem spitzen Winkel (α) von maximal 30°.

12. Verfahren nach Anspruch 11, **dadurch gekennzeichnet, daß** das Festlegen des ersten Ferritkerns und des zweiten Ferritkerns im Spulenträger durch Verkleben erfolgt.

## Claims

1. Ferrite antenna, having at least one winding that is disposed around a core made of ferrite material, wherein a second core (3) made of ferrite material is assigned to the first core (2), which carries the winding (4) or windings and is disposed in a fixed manner in a coil support (1), said second core being coaxial with the first core (2) and being disposed movably in an axial direction in the same coil support (1) in such a way that the end faces of the two cores (2, 3), which end faces face each other, are at a set variable distance from one another as a result of moving the second core (3) in axial direction for alignment purposes, wherein the second core (3) can be fixed in or on the coil support (1) after the alignment and wherein the second ferrite core (3) is disposed tilted through an acute angle (α) of not more than 30° with respect to the longitudinal axis of the first ferrite core (2).

2. Ferrite antenna according to Claim 1, **characterized in that** the winding (4) or windings is/are directly wound onto the first core (2).

3. Ferrite antenna according to Claim 1 or 2, **characterized in that** the second core also has at least one winding.

4. Ferrite antenna according to any one of Claims 1 to 3, **characterized in that** the second core (3) has the same shape and axial length as the first core (2).

5. Ferrite antenna according to any one of Claims 1 to 4, **characterized in that** both cores (2, 3) have a rectangular cross section.

6. Ferrite antenna according to Claim 5, **characterized in that** the coil support (1) is composed of plastics material and is formed as a flat strip on which each core (2, 3) is mounted by means of its wide side and which has at at least one of its longitudinal edges at least one mounting (1.1, 1.2) that is hook-shaped in cross section and that encompasses the respective core at its narrow edge.

7. Ferrite antenna according to any one of Claims 1 to 4, **characterized in that** both cores have a circular cross section.

8. Ferrite antenna according to Claim 7, **characterized in that** the coil support is composed of plastics material and is formed as a tube or a tube section that encompasses the respective core at least over a part of its circumference.

9. Ferrite antenna according to any one of Claims 1 to 8, **characterized in that** the cores (2, 3) are fixed in or on the coil support (1) by gluing.

10. Key-free actuating and/or locking device for motor vehicles having a ferrite antenna in accordance with any one of the preceding claims that is disposed in the door handle.

11. Method of producing and of aligning a ferrite antenna according to any one of Claims 1 to 9, **characterized by** the following method steps:
a) preparation of a coil support;
b) preparation of two ferrite cores;
c) winding of at least one winding around the first ferrite core;
d) insertion of the first ferrite core in the coil support and fixing of the first ferrite core in the coil support;
e) insertion of the second ferrite core in the coil support;
f) alignment of the ferrite antenna by axially moving the second ferrite core in the coil support;
g) fixing of the second ferrite core in the coil support;
h) tilting of the second ferrite core with respect to the longitudinal axis of the first ferrite core through an acute angle (α) of not more than 30°.

12. Method according to Claim 11, **characterized in that** the first ferrite core and the second ferrite core are fixed in the coil support by gluing.

## Revendications

1. Antenne de ferrite comprenant au moins un bobinage disposé autour d'un noyau en matériau de ferrite, cette antenne comportant un premier noyau (2), qui supporte le/les bobinage(s) (4) et qui est disposé de manière fixe dans un support de bobines (1), auquel est affecté un second noyau (3) en matériau de ferrite, lequel est disposé axialement par rapport au premier noyau (2) et est disposé dans le même support de bobines (1) de manière à pouvoir être déplacé dans le sens axial, de telle sorte que les faces frontales des deux noyaux (2, 3) tournées l'une vers l'autre présentent entre elles un écart prédéfini, modifiable par le déplacement du second noyau (3) dans la direction axiale à des fins de réglage, le second noyau (3) pouvant être fixé après le réglage dans ou sur le support de bobines (1), et le second noyau (3) étant disposé à un angle aigu (□) de 30° maximum par rapport à l'axe longitudinal du premier noyau de ferrite (2).

2. Antenne de ferrite selon la revendication 1, **caractérisée en ce que** le/les bobinage(s) (4) est/sont directement enroulé(s) sur le premier noyau (2).

3. Antenne de ferrite selon la revendication 1 ou 2, **caractérisée en ce que** le second noyau supporte également au moins un bobinage.

4. Antenne de ferrite selon l'une quelconque des revendications 1 à 3, **caractérisée en ce que** le second noyau (3) possède la même forme et la même longueur axiale que le premier noyau (2).

5. Antenne de ferrite selon l'une quelconque des revendications 1 à 4, **caractérisée en ce que** les deux noyaux (2, 3) ont une section rectangulaire.

6. Antenne de ferrite selon la revendication 5, **caractérisée en ce que** le support de bobines (1) est en matériau plastique et est conçu comme un bandeau plat, sur lequel chaque noyau (2, 3) est placé avec sa face large et qui présente sur au moins une de ses arêtes longitudinales au moins une fixation (1.1, 1.2) dont la section est en forme de crochet et qui comporte le noyau respectif sur la face étroite de ce dernier.

7. Antenne de ferrite selon l'une quelconque des revendications 1 à 4, **caractérisée en ce que** les deux noyaux possèdent une section ronde.

8. Antenne de ferrite selon la revendication 7, **caractérisée en ce que** le support de bobines est en matériau plastique et est conçu comme un tube ou comme un tube partiel comportant le noyau respectif au moins sur une partie de son périmètre.

9. Antenne de ferrite selon l'une quelconque des revendications 1 à 8, **caractérisée en ce que** les noyaux (2, 3) sont fixés dans ou sur le support de bobines (1) par collage.

10. Dispositif d'actionnement et/ou de fermeture sans clé pour véhicules automobiles avec antenne de ferrite selon l'une quelconque des revendications précédentes qui est placé dans la poignée de porte.

11. Procédé de fabrication et de réglage d'une antenne de ferrite selon l'une quelconque des revendications 1 à 9, **caractérisé par** les étapes de procédé suivantes :
a) mise à disposition d'un support de bobines;
b) mise à disposition de deux noyaux de ferrite;
c) enroulement du premier noyau de ferrite avec au moins un bobinage;
d) mise en place du premier noyau de ferrite dans le support de bobines et fixation du premier noyau de ferrite dans le support de bobines ;
e) mise en place du second noyau de ferrite dans le support de bobines;
f) réglage de l'antenne de ferrite par un déplacement axial du second noyau de ferrite dans le support de bobines ;
g) fixation du second noyau de ferrite dans le support de bobines ;
h) pivotement du second noyau de ferrite d'un angle aigu (□) de 30° maximum par rapport à l'axe longitudinal du premier noyau de ferrite.

12. Procédé selon la revendication 11, **caractérisé en ce que** la fixation du premier noyau de ferrite et du second noyau de ferrite dans le support de bobines s'effectue par collage.
